# EUROPEAN PATENT APPLICATION

(11) **EP 3 674 849 A1**
(43) Date of publication of application: **01.07.2020**
(21) Application number: 19203658.0
(22) Date of filing: 16.10.2019
(51) Int. Cl.: G06F 3/01, G06F 3/0488

(54) **HAPTIC EFFECT SIGNAL PROCESSING**

(30) Priority: 27.12.2018 US 201816233530
(71) Applicant: Immersion Corporation, San Jose, CA 95134 (US)
(72) Inventor: SHERRY, Brian, San Jose, CA California 95110 (US); SABOUNE, Jamal, Montreal, Québec H2W 1N6 (CA); RAYNES, Paige, Walnut Creek, CA California 94598 (US); AGAPIOU, Antonio, Dublin, CA California 94568 (US)
(74) Representative: Hofstetter, Schurack & Partner

(57) **Abstract**

The present invention provides a haptic device including a communications interface, an input device, a haptic output device and a processor. The communications interface receives a haptic track file including a list of real-time haptic effect modifiers, associated parameters, and a haptic control signal. The input device receives input from a user including a selection of a real-time haptic effect modifier and a value for an associated parameter. The haptic output device renders one or more haptic effects to the user based on the haptic control signal. The processor decodes the haptic track file, applies the selected real-time haptic effect modifier to the haptic control signal to generate a modified haptic control signal, and provides the modified haptic control signal to the haptic output device. The haptic output device renders one or more modified haptic effects to the user based on the modified haptic control signal.

## Description

### TECHNICAL FIELD

The present invention relates to a haptic device. More particularly, the present invention relates to haptic effect signal processing for a haptic device.

### BACKGROUND

Electronic devices, such as mobile devices, personal computers, home video game consoles, handheld video game consoles, microconsoles, etc., typically use visual and auditory cues to provide feedback to a user. In some electronic devices, kinesthetic feedback (e.g., active and resistive force feedback) and/or tactile feedback (e.g., vibration, texture, temperature variation, etc.) may be provided to the user. In general, such feedback is collectively known as "haptic feedback" or "haptic effects." Haptic effects provide cues that enhance a user's interaction with an electronic device, from augmenting simple alerts to specific events to creating a greater sensory immersion for the user within a simulated or virtual environment.

A mobile device that renders haptic effects to a user, such as a smartphone, is very limited with respect to customization. For example, the rendering of vibrotactile haptic effects can be enabled by turning on a general "vibration" setting. A vibrotactile haptic effect can then be assigned to a certain function, such as, for example, "ringtone," "text tone," "new voicemail," "new mail," "sent mail," "calendar alerts," "reminder alerts," etc., by selecting a pre-defined vibration pattern from a list. Certain smartphones allow a user to define a new vibration pattern by "tapping" on the screen, and then assign the user-defined vibration pattern to a certain function of the smartphone. However, neither pre-defined vibration patterns nor user-defined vibration patterns can be modified during playback.

### SUMMARY

Embodiments of the present invention advantageously provide a haptic device that includes a communications interface, an input device, a haptic output device, and a processor.

The communications interface is configured to receive a haptic track file including a list of real-time haptic effect modifiers, a plurality of parameters associated with the real-time haptic effect modifiers, and a haptic control signal. The input device is configured to receive input from a user, the input including a selection of at least one real-time haptic effect modifier from the list of real-time haptic effect modifiers, and a value for at least one parameter associated with the selected real-time haptic effect modifier. The haptic output device is configured to render one or more haptic effects to the user based on the haptic control signal.

The processor is configured to decode the haptic track file to extract the list of real-time haptic effect modifiers, the plurality of parameters associated with the real-time haptic effect modifiers, and the haptic control signal; apply the selected real-time haptic effect modifier to the haptic control signal, based on the value for the parameter associated with the selected real-time haptic effect modifier, to generate a modified haptic control signal; and provide the modified haptic control signal to the haptic output device.

### BRIEF DESCRIPTION OF THE DRAWINGS

FIG. 1 illustrates a block diagram of a haptic system, in accordance with an embodiment of the present invention.
FIG. 2 illustrates a block diagram of a haptic device, in accordance with an embodiment of the present invention.
FIG. 3 depicts a flow chart illustrating functionality for creating haptic content, in accordance with an embodiment of the present invention.
FIG. 4 depicts a flow chart illustrating alternative functionality for creating haptic content, in accordance with an embodiment of the present invention.
FIG. 5 depicts a block diagram of a haptic track file, in accordance with an embodiment of the present invention.
FIG. 6 depicts a block diagram of a haptic track file, in accordance with another embodiment of the present invention.
FIG. 7 depicts a flow chart illustrating functionality for rendering haptic content, in accordance with an embodiment of the present invention.
FIG. 8 depicts a flow chart illustrating alternative functionality for rendering haptic content, in accordance with an embodiment of the present invention.
FIG. 9 depicts graphical user interface (GUI) for a haptic device, in accordance with an embodiment of the present invention.

### DETAILED DESCRIPTION

Embodiments of the present invention will now be described with reference to the drawing figures, in which like reference numerals refer to like parts throughout.

Embodiments of the present invention provide a haptic system including a haptic server and a haptic device. The haptic system advantageously allows a user to modify a haptic control signal during playback on the haptic device. The haptic control signal encodes one or more haptic effects that are rendered by the haptic device, which may be a smartphone, tablet, wearable device, etc. The haptic control signals are modified during playback by applying one or more real-time haptic effect modifiers to the haptic control signal. The user may advantageously customize the parameters for these real-time haptic effect modifiers. A haptic effect may also be rendered during playback based on a set of user-customizable parameters encoded within a haptic track file.

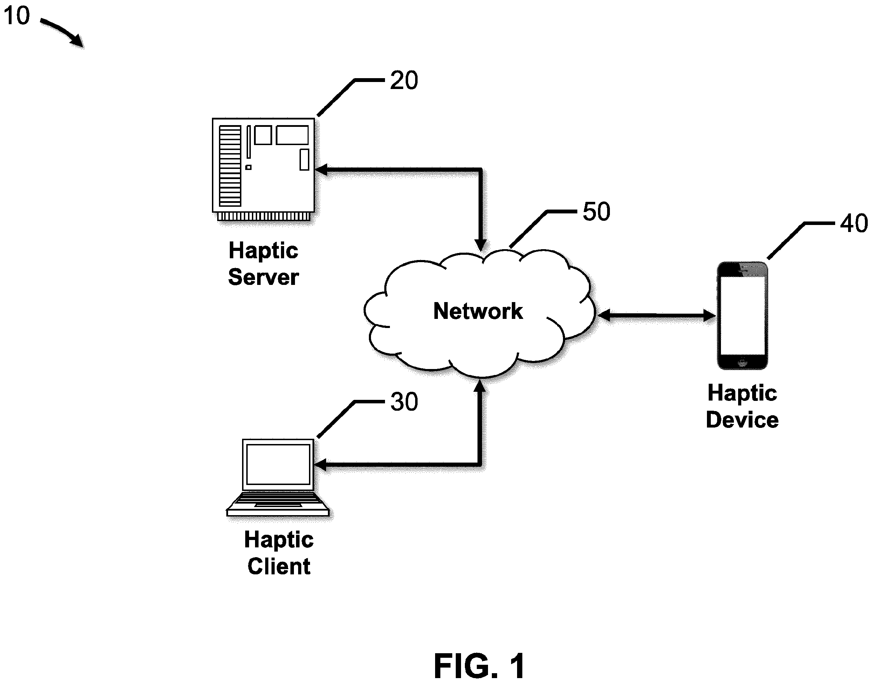

FIG. 1 illustrates a block diagram of a haptic system, in accordance with an embodiment of the present invention. Haptic system 10 includes haptic server 20, haptic client 30 and haptic device 40 which are coupled to network 50. Network 50 may include one or more local area networks, wide area networks, the Internet, etc. Further, network 50 may include various combinations of wired and/or wireless networks, such as, for example, copper wire or coaxial cable networks, fiber optic networks, Bluetooth wireless networks, WiFi wireless networks, CDMA, FDMA and TDMA cellular wireless networks, etc., which execute various network protocols, such as, for example, wired and wireless Ethernet, Bluetooth, etc.

Haptic server 20 is a computer on which a designer creates haptic content for haptic device 40. More particularly, haptic server 20 is a specifically-programmed general purpose computer that executes a haptic authoring application to design real-time haptic effect modifiers for haptic control signals. The haptic control signals may be created by the designer using the haptic authoring application, or the haptic control signals may be created by the designer using a different application. Alternatively, the haptic control signals may be created by another designer, application or system. Further, the haptic control signals can be created automatically from audio or video content and/or from sensory information.

In one embodiment, the haptic authoring application is a web server application, hosted by haptic server 20, that communicates with a web browser application executing on haptic client 30, such as a laptop computer, a desktop computer, etc. In another embodiment, the haptic authoring application is a standalone application that executes on haptic server 20, which may be a laptop computer, a desktop computer, etc. In this embodiment, haptic server 20 and haptic client 30 are the same computer.

In a web-based embodiment, the haptic authoring application executes on haptic server 20 and generates a graphical user interface (GUI) for haptic client 30, which is presented to the designer via a browser (or other) application that executes on haptic client 30. The GUI allows the designer to design real-time haptic effect modifiers that are applied to a haptic control signal during playback for a particular haptic device 40. For example, the designer may select one or more real-time haptic effect modifiers from a library of real-time haptic effect modifiers. Alternatively, the designer may create a real-time haptic effect modifier using a software development tool, a software development kit (SDK), an integrated development environment (IDE), etc.

Each real-time haptic effect modifier includes one or more parameters that are defined by the designer. Each parameter may have a value and a range that includes a minimum value and a maximum value. The range defines the boundaries of permissible values available to the user, and the user may advantageously modify the value of each parameter to customize the haptic control signal during playback. The designer may also define a set of discrete values for the real-time haptic effect modifier. Each discrete value is associated with a fixed value for each parameter underlying the real-time haptic effect modifier, and the user may advantageously change the discrete value, rather than the underlying parameters, to customize the haptic control signal during playback. As discussed below, the set of discrete values represents a single modifier or "flavor" for the real-time haptic effect modifier.

Generally, a haptic track file includes a haptic control signal that is provided to a haptic output device. The haptic control signal encodes one or more haptic effects that are rendered by the haptic output device. For example, a single haptic effect may be encoded in the haptic control signal. In another example, multiple haptic effects may be encoded in the haptic control signal. In further examples, the haptic control signal may encode multiple haptic effects that are associated with audio data, video data, sensor data, multi-media data, etc. In one embodiment, the haptic control signal is a sequence of magnitude values separated by a fixed time interval. Other haptic control signal formats are also contemplated.

In response to designer input received from the browser (or other) application executing on haptic client 30, the haptic authoring application encodes a list of real-time haptic effect modifiers, parameters for the real-time haptic effect modifiers, and the haptic control signal into a haptic track file. In certain embodiments, the haptic track file is transmitted from haptic server 20 to haptic device 40 over network 50. In other embodiments, the haptic track file may be saved on a hard disk of a computer other than haptic server 20, and downloaded to haptic device 40 using a Universal Serial Bus (USB) cable, Bluetooth wireless connection, etc. In these embodiments, haptic device 40 does not need to connect to a network to receive the haptic track file. For example, haptic device 40 may be a gamepad on which a user can play different haptic effects that are streamed or controlled through a game console.

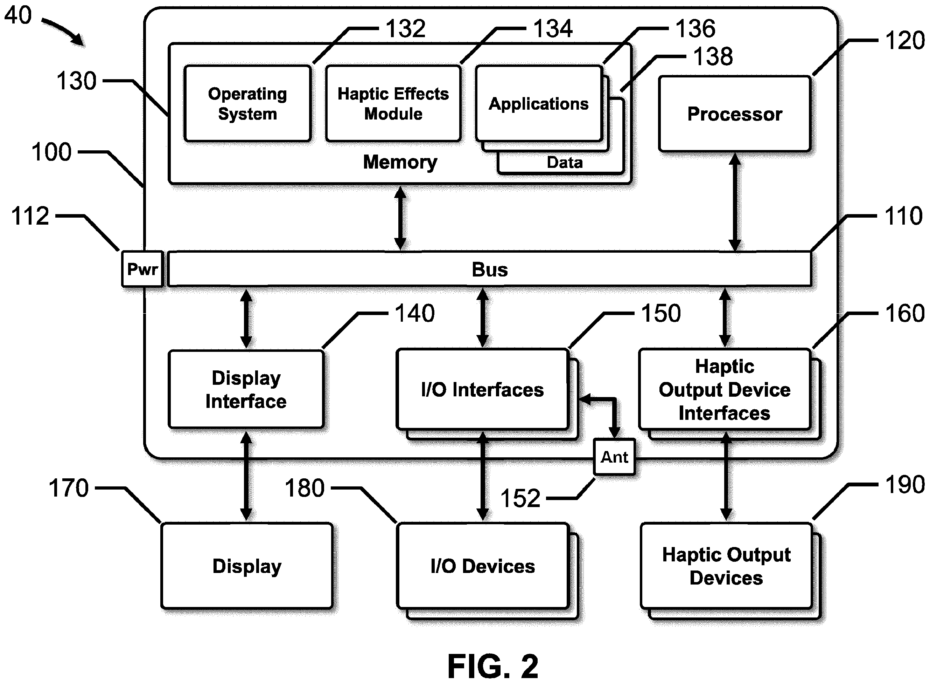

Software executing on haptic device 40, such as, for example, haptic effects module 134 depicted in FIG. 2, decodes the haptic track file and extracts the list of real-time haptic effect modifiers, the parameters for the real-time haptic effect modifiers and the haptic control signal. The library of real-time haptic effect modifiers from which the designer made his selection may be provided on haptic device 40. Alternatively, real-time haptic effect modifiers that were programmed by the designer may be transmitted from haptic server 20 to haptic device 40 over network 50, either independently or together with the haptic track file.

The user may customize the designer's real-time haptic effect modifiers using a GUI provided by haptic device 40. For example, the user may choose not to apply any of the real-time haptic effect modifiers selected by the designer. In this example, the haptic effects within the haptic control signal are rendered without modifications. In another example, the user may select a single real-time haptic effect modifier to apply to the haptic control signal. In this example, the user may change the value of each parameter, or select a discrete value for each parameter of the real-time haptic effect modifier. In a further example, the user may select more than one real-time haptic effect modifier to apply to the haptic control signal. In this example, the user may change the value of each parameter, or select a discrete value for each parameter, of each real-time haptic effect modifier.

During playback of the haptic control signal on haptic device 40, the user-selected and customized real-time haptic effect modifiers are applied to the haptic control signal to generate a modified haptic control signal. The modified haptic control signal is provided to a haptic output device via a haptic output device interface, such as, for example, haptic output device 190 and haptic output device interface 160 depicted in FIG. 2. The haptic output device renders modified haptic effects to the user based on the modified haptic control signal.

Several examples of real-time haptic effect modifiers are presented below.

A haptic volume modifier increases or decreases the volume of the haptic effect rendered by the haptic output device during playback by increasing or decreasing the magnitude of the haptic control signal to create the modified haptic control signal. For example, the magnitude values of the original haptic control signal may be scaled up to increase the volume and scaled down to decrease the volume.

A haptic frequency modifier changes the haptic control signal by increasing, decreasing or otherwise modifying the frequency (or frequencies) of the haptic control signal to create the modified haptic control signal. The haptic frequency modifier increases, decreases or otherwise modifies the frequency (or frequencies) of the haptic effect rendered by the haptic output device during playback.

One example of a haptic frequency modifier is a frequency shift modifier. Some users prefer to experience haptic effects at lower frequencies, while other users prefer to experience haptic effects at higher frequencies. The frequency shift modifier estimates the frequency range of the haptic control signal, and then shifts the frequency range of the haptic control signal to the user's preferred frequency range. The frequency shift modifier extracts an envelope for each haptic effect within the haptic control signal, and then fills this envelope with the desired frequency (or frequencies). The envelope may be a root mean square (RMS) window, max or mean value window, etc.

The frequency shift modifier may follow a linear scheme. For example, if the haptic control signal frequency range is between 150 Hz and 200 Hz, and the preferred haptic control signal frequency range is between 50 Hz and 100 Hz, then a haptic effect having an original frequency of 170 Hz would be transformed into a haptic effect having a shifted frequency of 70 Hz. Alternatively, the frequency shift modifier may follow a non-linear scheme.

Additionally, the frequency shift modifier may compensate for the resonant frequency of the haptic output device by adjusting the magnitude of the modified haptic control signal. For example, the magnitude of the modified haptic control signal may be reduced if the shifted frequency is closer to the resonant frequency of the haptic output device. Further, the frequency shift modifier may allow the user to "randomize" the frequencies of the haptic control signal, and specify a duration for each random interval.

Other examples of haptic frequency modifiers include a phaser modifier, a flanger modifier, a chorus modifier, a filter sweep modifier, an envelope modifier, a wah-wah modifier, a resonator modifier, an arpeggiator modifier, etc.

A phaser modifier changes the haptic control signal by altering the phase of different frequency components of the haptic control signal using a series of all pass filters, and then re-combining the altered haptic control signal with the original haptic control signal. The modified haptic control signal includes notches in the frequency spectrum where the altered and the original haptic control signals destructively combine.

A flanger modifier changes the haptic control signal by altering the phase of different frequency components of the haptic control signal using a delay line, and then re-combining the altered haptic control signal with the original haptic control signal to create the modified haptic control signal. The flanger modifier is similar to the phaser modifier.

A chorus modifier changes the haptic control signal by delaying and modulating the haptic control signal using a low frequency oscillator, and then mixing the haptic control signal with the delayed and modulated haptic control signal to create the modified haptic control signal. The chorus modifier is similar to the flanger modifier.

A filter sweep modifier changes the haptic control signal by filtering the haptic control signal using a low pass filter with a moving cutoff frequency to create the modified haptic control signal. The cutoff frequency of the low pass filter may be moved or "swept" over a predetermined frequency range.

An envelope modifier changes the haptic control signal by filtering the haptic control signal using an envelop filter to create the modified haptic control signal. The envelope filter detects the magnitude envelope of the haptic control signal, which is used as the modified haptic control signal. An upper magnitude envelope or a lower magnitude envelope may be used.

A wah-wah modifier changes the haptic control signal by filtering the haptic control signal using a band pass filter with a user-selectable frequency band to create the modified haptic control signal. The user-selectable frequency band of the band pass filter is moved or "swept" over a user-selectable frequency range.

A resonator modifier changes the haptic control signal by delaying the haptic control signal using multiple delay lines, and then feeding the delayed signals back into the haptic control signal to create the modified haptic control signal.

An arpeggiator modifier changes the haptic control signal by replicating the haptic control signal at a user-selectable number of different frequencies, and then combining the haptic control signal with the replicated haptic control signals to create the modified haptic control signal. The frequencies of the replicated haptic control signals may increase by a user-selectable amount, or the frequencies of the replicated haptic control signals may decrease by a user-selectable amount. The magnitude of the replicated haptic control signals may be progressively reduced with respect to the magnitude of the original haptic control signal.

A haptic contrast modifier changes the haptic control signal by applying dynamic range compression or expansion to the haptic control signal to create the modified haptic control signal. The haptic contrast modifier allows the user to distinctly experience the haptic effect, and with a higher or lower dynamic range. Dynamic range compression or expansion may be applied gradually through a threshold (e.g., soft-knee compression) or abruptly at threshold (e.g., hard-knee compression).

A haptic bass boost modifier changes the haptic control signal by filtering the haptic control signal using a low pass filter with user-selectable parameters to create the modified haptic control signal. The haptic bass boost modifier increases the magnitude of low frequency haptic effects and reduces the magnitude of high frequency haptic effects. The low pass filter may be implemented using a Chebyshev filter, a sinc filter, etc. The user controls the amount of boost or attenuation by changing the filter parameters.

A haptic delay modifier changes the haptic control signal by delaying the haptic control signal by a user-selectable time delay. The delayed haptic control signal may also be repeated, combined, separated by silence gaps, etc.

A haptic reverberation modifier changes the haptic control signal by creating multiple copies of the haptic control signal to create the modified haptic control signal. The copies of the haptic control signal may be sequentially combined to create a repeating, decaying echo. The user may select the reverberation time and decay factor, such as, for example, linear, exponential, etc. For a linear decay factor, the first copy of the haptic control signal may be scaled 80%, the second copy of the haptic control signal may be scaled 60%, the third copy of the haptic control signal may be scaled 40%, and so on. For an exponential decay factor, the first copy of the haptic control signal may be scaled 50%, the second copy of the haptic control signal may be scaled 20%, the third copy of the haptic control signal may be scaled 10%, and so on.

A haptic tremolo modifier changes the haptic control signal by repeatedly increasing and decreasing the magnitude of the haptic control signal to create the modified haptic control signal. The haptic tremolo modifier creates a "shuddering" effect. The speed of the haptic tremolo modifier may be selected by the user.

Generally, two or more real-time haptic effect modifiers may be combined together, by sequentially applying the real-time haptic effect modifiers to the haptic control signal, in any order.

Advantageously, the designer may define a single modifier or "flavor" that is associated with the other parameters of a real-time haptic effect modifier. A flavor may have a discrete value that is selected from a set of discrete values, or a flavor may have a continuous value that varies over a range. More particularly, each discrete value is associated with a pre-defined value, determined by the designer, for each parameter of the real-time haptic effect modifier. The flavor may be encoded with the parameters within the haptic track file. During playback, the user may customize the value of the flavor, which sets the underlying parameter values of the real-time haptic effect modifier to the pre-defined values determined by the designer.

In another embodiment, rather than apply a real-time haptic effect modifier to the haptic control signal during playback, a haptic effect may be generated and rendered during playback based on one or more parameters that are encoded within the haptic track file. For example, the designer may select a haptic texture effect and define the values and ranges for the related parameters, such as pulse width, silence gap duration, etc. The user may customize these parameter values, as described above, and the haptic texture effect may then be rendered during playback.

In an embodiment, the designer may encode a flavor named "road texture" with the parameters associated with the haptic texture effect into the haptic track file. During playback, the user may customize the "road texture" flavor by simply selecting the desired flavor value in a GUI.

For example, the designer may define discrete values for the "road texture" flavor of the haptic texture effect, such as, "rough," "soft," "scratchy," etc., and as well as the underlying parameter values for each flavor. The "rough" texture may include parameter values that define 20 ms pulses with 30 ms silence gaps, while the "soft" texture may include parameter values that define 50 ms pulses with 80 ms silence gaps. During playback, the user may select a "road texture" flavor widget in the GUI, then select the desired flavor value, e.g., "rough," "soft," "scratchy," etc., from a pull-down menu, a pop-up menu, etc. Alternatively, the user may select the desired flavor value directly from a set of radio buttons presented in the GUI. Other GUI designs are also contemplated. The parameter values associated with the selected flavor value are then used to generate the haptic texture effect during playback.

In another example, the designer may define a continuous value and a range of permissible parameter values for the "road texture" flavor of the haptic texture effect. During playback, the user selects a "road texture" flavor widget in the GUI, then selects the desired flavor value by articulating the widget to a particular value or setting. The widget may be a slider, a knob, etc., that allows the "road texture" flavor value to be selected from a minimum value corresponding to a "very soft" texture, to a maximum value corresponding to a "very rough" texture. In this example, the minimum value may be 0 and the maximum value may be 100. Other value for the minimum and maximum values may also be used.

In this example, the designer defines several underlying parameters, such as pulse width and silence gap duration, for the minimum flavor value and the maximum flavor value. "Softer" textures may have longer pulse widths and larger silence gaps, while "rougher" textures may have shorter pulse widths and smaller silence gaps. In this example, the maximum or "very rough" flavor value may have 10 ms pulses and 20 ms silence gaps, while minimum or "very soft" flavor value may have 100 ms pulses and 150 ms silence gaps. Based on these designer-selected parameter values for the minimum and maximum flavor values, the pulse width parameter has a minimum value of 10 ms and a maximum value of 100 ms. Similarly, the silence gap duration has a minimum value of 20 ms and a maximum value of 150 ms.

The user's selected flavor value from the GUI is used to determine the underlying parameter values by interpolation based on the design-selected parameter values, such as linear interpolation, polynomial interpolation, spline interpolation, logarithmic interpolation, etc. In a linear interpolation example, if the user adjusts the "road texture" widget to its central value, e.g., 50, the pulse width parameter value and the silence gap duration values are interpolated to be at the center of their respective ranges. For the pulse width parameter, the interpolated value is 55 ms (i.e., 10 + (50/100)*(100-10)). For the pulse width parameter, the interpolated value is 85 ms (i.e., 20 + (50/100)*(150-20)). The designer may also define different interpolation methods to different parameters, such as linear interpolation for the pulse width parameter and logarithmic for the silence gap duration parameter. The interpolated parameter values are then used to generate the haptic texture effect during playback.

Additionally, the designer may define multiple flavors for a real-time haptic effect modifier. In one example, the designer may define a "road texture" flavor and a "road noise" flavor for a haptic texture effect. The "road texture" flavor may vary from "soft" to "rough," as described above, and the "road noise" flavor may vary from "quiet" to "loud" in a similar manner. Each flavor may be defined using independent parameters, or, alternatively, the flavors may share one or more parameters.

The designer may also associate a flavor with an event in the environment in which the event is triggered, such as a gaming environment, a mobile environment, etc. In this example, the real-time haptic effect modifier may be dynamically modified without any customization by the user. In one example, the designer defines a flavor that increases the roughness of a real-time haptic effect modifier when a value determined from a general GUI widget, such as a wheel, is farther from the particular value.

Flavors may be also incorporated within a plugin software module to the haptic authoring application. In this example, the designer may select a certain haptic texture effect and apply a "texture softness" flavor, selected from the plugin, to modify the haptic texture effect from softer to rougher without needing to modify, or to even to know, the underlying parameters to be altered, such as pulse width, silence gap, etc.

Advantageously, a flavor leverages a designer's knowledge in creating haptic effects to enhance a user's playback experience or to enhance a less-experienced designer's work. The designer of the real-time haptic effect modifier controls the flavors and their pre-defined parameters values, and the way in which the real-time haptic effect modifiers are triggered or dynamically applied. The flavors for real-time haptic effect modifiers are encoded in the haptic track file, or, alternatively, the flavors and parameters may be streamed from the cloud.

FIG. 2 illustrates a block diagram of a haptic device, in accordance with an embodiment of the present invention. Haptic device 40 includes computer 100, display 170, one or more I/O devices 180, and one or more haptic output devices 190.

Computer 100 may be incorporated into a portable electronic device, such as, for example, a smartphone, a tablet, a wearable device such as a smartwatch, a portable gaming device, etc. Computer 100 includes bus 110, processor 120, memory 130, display interface 140, one or more I/O interfaces 150, and one or more haptic output device interfaces 160. Display interface 140 is coupled to display 170, I/O interface 150 is coupled to I/O device 180, and haptic output device interface 160 is coupled to haptic output device 190.

Bus 110 is a communication system that transfers data between processor 120, memory 130, display interface 140, I/O interface 150, and haptic output device interface 160, as well as other components not depicted in FIG. 1. Power connector 112 is coupled to bus 110 and a power supply (not shown), such as a battery, etc.

Processor 120 includes one or more general-purpose or application-specific microprocessors to perform computation and control functions for computer 100. Processor 120 may include a single integrated circuit, such as a micro-processing device, or multiple integrated circuit devices and/or circuit boards working in cooperation to accomplish the functions of processor 120. In addition, processor 120 may execute computer programs, such as operating system 132, haptic effects module 134, other applications 136, etc., stored within memory 130.

Memory 130 stores information and instructions for execution by processor 120. Memory 130 may contain various components for retrieving, presenting, modifying, and storing data. For example, memory 130 may store software modules that provide functionality when executed by processor 120. The modules may include an operating system 132 that provides operating system functionality for computer 100. The modules may also include haptic effects module 134 that modifies and serves haptic content to a user. In certain embodiments, haptic effects module 134 may include a plurality of modules, each module providing specific individual functionality for modifying and serving haptic content to a user. Applications 136 may include other applications that cooperate with haptic effects module 134 to serve haptic content to the user. Data 138 may include haptic track files, settings and data for haptic effects module 134, etc.

Generally, memory 130 may include a variety of non-transitory computer-readable medium that may be accessed by processor 120. In the various embodiments, memory 130 may include volatile and nonvolatile medium, non-removable medium and/or removable medium. For example, memory 130 may include any combination of random access memory ("RAM"), dynamic RAM (DRAM), static RAM (SRAM), read only memory ("ROM"), flash memory, cache memory, and/or any other type of non-transitory computer-readable medium.

Display interface 140 is coupled to display 170.

I/O interfaces 150 are configured to transmit and/or receive data from I/O devices 180. I/O interfaces 150 enable connectivity between processor 120 and I/O devices 180 by encoding data to be sent from processor 120 to I/O devices 180, and decoding data received from I/O devices 180 for processor 120. Generally, data may be sent over wired and/or a wireless connections. For example, I/O interfaces 150 may include one or more wired communications interfaces, such as USB, Ethernet, etc., and/or one or more wireless communications interfaces, coupled to one or more antennas 152, such as WiFi, cellular, Bluetooth, etc.

Haptic output device interface 160 is coupled to haptic output device 190, and may include one or more driver circuits for haptic output device 190. Generally, each driver circuit supports a particular type of haptic output device 190, such as, for example, an electric motor, an electro-magnetic actuator, a voice coil, a solenoid, an eccentric rotating mass (ERM) vibration motor, a harmonic ERM motor ("HERM"), a linear resonant actuator (LRA), a piezoelectric actuator, an electroactive polymer ("EAP") actuator, a shape memory alloy, an electrostatic friction display, an ultrasonic vibration generator, a high bandwidth actuator, etc. In certain embodiments, a single haptic driver circuit may support different kinds of haptic output devices 190. Haptic output device interface 160 receives haptic control signals from processor 120, converts the haptic control signals to haptic output device drive signals, and transmits the haptic output device drive signals to haptic output device 190.

Display 170 may be a liquid crystal display (LCD) of a smartphone, smartwatch, etc.

Generally, I/O device 180 is a device configured to provide input to computer 100, and/or output from computer 100. I/O device 180 is operably connected to computer 100 using either a wireless connection or a wired connection. I/O device 180 may include a local processor coupled to a communication interface that is configured to communicate with computer 100 using the wired or wireless connection.

For example, I/O device 180 may be an input device such as a touchscreen for display 170, a touchpad, a game controller, a keypad or keyboard, etc.

I/O device 180 may be an output device, such as one or more audio speakers. Processor 120 may transmit an audio signal to a speaker (I/O device 180) through an audio interface (I/O interface 150), which in turn outputs audio effects. The speaker (I/O device 180) may be, for example, a dynamic loudspeaker, an electrodynamic loudspeaker, a piezoelectric loudspeaker, a magnetostrictive loudspeaker, an electrostatic loudspeaker, a ribbon and planar magnetic loudspeaker, a bending wave loudspeaker, a flat panel loudspeaker, a heil air motion transducer, a plasma arc speaker, a digital loudspeaker, etc.

I/O device 180 may be an input device, such as one or more sensors. A sensor is configured to detect a form of energy or other physical property, and convert the detected energy, or other physical property, into an electrical signal. The sensor (I/O device 180) then sends the converted signal to I/O interface 150.

Generally, the sensor (I/O device 180) may be an acoustical or sound sensor, an electrical sensor, a magnetic sensor, a pressure sensor, a motion sensor such as an accelerometer, etc., a navigation sensor such as Global Positioning System (GPS) receiver, accelerometer, etc., a position sensor, a proximity sensor, a movement-related sensor, an imaging or optical sensor such as a camera, a force sensor, a temperature or heat sensor, etc. The sensor may include smart materials, such as piezo-electric polymers, which, in some embodiments, function as both a sensor and an actuator.

Haptic output devices 190 output haptic effects such as vibrotactile haptic effects, kinesthetic haptic effects, deformation haptic effects, etc., in response to receiving a haptic signal. Haptic output device 190 may include a haptic actuator, such as an electric motor, an electro-magnetic actuator, a voice coil, a solenoid, an eccentric rotating mass (ERM) vibration motor, a harmonic ERM motor ("HERM"), a linear resonant actuator (LRA), a piezoelectric actuator, an electroactive polymer ("EAP") actuator, a shape memory alloy, an electrostatic friction display, an ultrasonic vibration generator, a high bandwidth actuator, etc. In some examples, haptic output device 190 may include a haptic actuator and a haptic actuator drive circuit. In other examples, haptic output device 190 may incorporated into I/O device 180, such as a game controller.

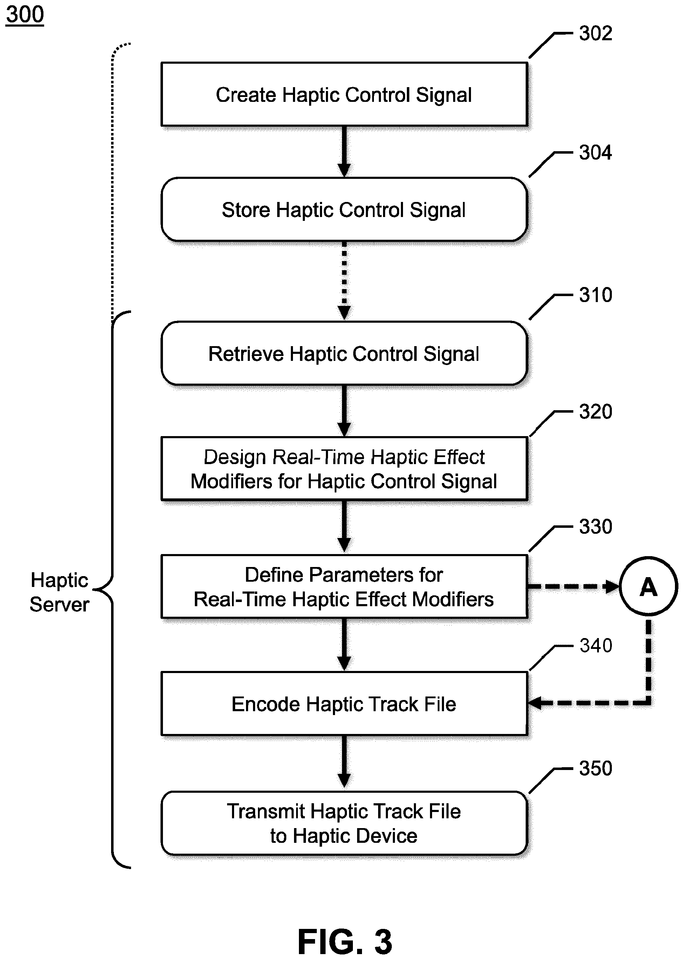

FIG. 3 depicts a flow chart illustrating functionality 300 for creating haptic content, in accordance with an embodiment of the present invention.

At 310, a haptic control signal is retrieved by haptic server 20. The haptic control signal may be stored in memory on haptic server 20, or, alternatively, the haptic control signal may be stored on a different server or computer coupled to network 50. The haptic control signal encodes one or more haptic effects to be rendered by haptic device 40.

The haptic control signal may be created by another designer, application or system coupled to network 50. Optionally, the haptic control signal may be created (at 302) by the designer using the haptic authoring application discussed above, or another application that creates haptic content, and then stored (at 304) in memory on haptic server 20.

At 320, real-time haptic effect modifiers for the haptic control signal are designed. For example, the designer may select one or more real-time haptic effect modifiers from a library of real-time haptic effect modifiers. Alternatively, the designer may program a real-time haptic effect modifier using a software development tool, integrated development environment, software development kit, etc. Generally, the designer creates a list of real-time haptic effect modifiers that may be applied to the haptic control signal during playback on haptic device 40.

At 330, parameters for the real-time haptic effect modifiers are defined. For example, the designer may define a value and a range for each parameter. The range defines the boundaries of permissible values available to the user, and the user may advantageously modify the value of each parameter to customize the haptic control signal during playback. In another example, the designer may define a value for each parameter and a flavor, which includes a set of discrete values. Each discrete value is associated with a pre-defined value for each parameter of the real-time haptic effect modifier. The user selects a discrete value from the flavor, rather than a value for each parameter, in order to customize the haptic control signal during playback. In this example, the flavor is the only user-selectable parameter.

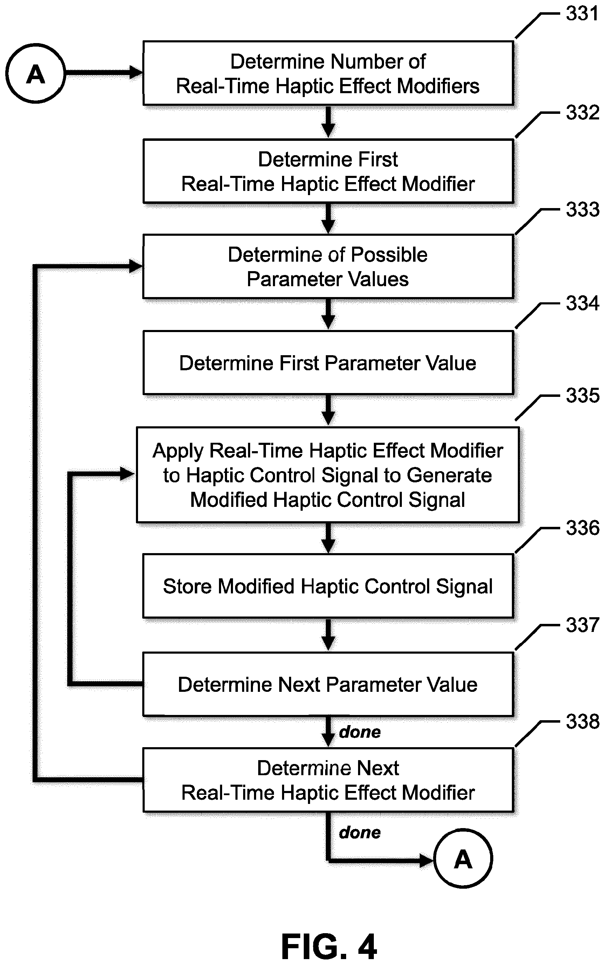

In one embodiment, after the parameters for the real-time haptic effect modifiers are defined at 330, flow proceeds to 340. In another embodiment, after the parameters for the real-time haptic effect modifiers are defined at 330, flow proceeds to 331 in FIG. 4, as discussed below.

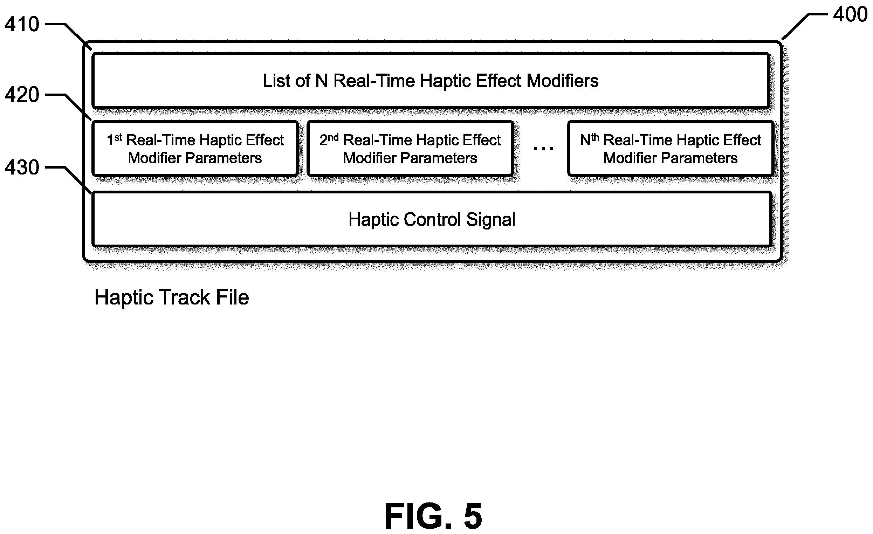

At 340, the haptic track file is encoded. In one embodiment, a list of the designer's real-time haptic effect modifiers, the designer's parameters for each real-time haptic effect modifier and the haptic control signal are encoded into the haptic track file, such as haptic track file 400 depicted in FIG. 5. Because the designer's real-time haptic effect modifiers are software routines or modules that operate on the haptic control signal, in this embodiment, each real-time haptic effect modifier is stored in memory 130 of haptic device 40. In one example, haptic device 40 stores the same library of real-time haptic effect modifiers used by the designer. In another example, the real-time haptic effect modifier routines or modules are transmitted from haptic server 20 to haptic device 40 separately from the haptic track file. In a further example, the real-time haptic effect modifier routines or modules are encoded within the haptic track file.

At 350, the haptic track file is transmitted from haptic server 20 to haptic device 40 over network 50.

FIG. 4 depicts a flow chart illustrating alternative functionality for creating haptic content, in accordance with an embodiment of the present invention.

Rather than include a single haptic control signal in the haptic track file for processing during playback by haptic device 40, in this alternative embodiment, the number of possible parameter values for each real-time haptic effect modifier is determined, a separate haptic control signal is generated for each possible parameter value of each real-time haptic effect modifier, and the separate haptic control signals are encoded in the haptic track file. The appropriate haptic control signal is determined for playback on haptic device 40 based on the user's selection of a real-time haptic effect modifier and a parameter value.

At 331, the number of real-time haptic effect modifiers are determined.

At 332, the first real-time haptic effect modifier is determined.

At 333, the possible values for the parameter of the real-time haptic effect modifier are determined. At 334, the first parameter value is determined. At 335, the real-time haptic effect modifier is applied to the haptic control signal based on the parameter value to generate a modified haptic control signal. At 336, the modified haptic control signal is stored. At 337, the next parameter value is determined, and flow loops back to 335. When all of the possible parameter values have been determined, flow proceeds to 338. At 338, the next real-time haptic effect modifier is determined, and flow loops back to 333.

When all of the real-time haptic effect modifier have been determined, flow proceeds to 340 (FIG. 3).

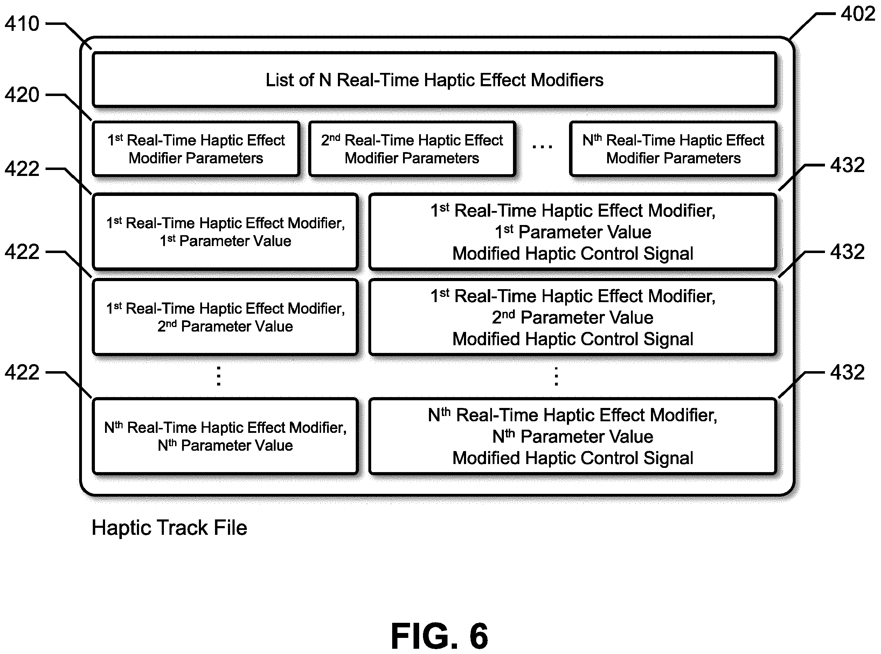

In this alternative embodiment, the haptic track file is encoded with multiple modified haptic control signals. At 340, a list of the designer's real-time haptic effect modifiers, the parameters for each real-time haptic effect modifier, the values for each real-time haptic effect modifier parameter and each modified haptic control signal are encoded into the haptic track file, as depicted in FIG. 6. In this embodiment, the real-time haptic effect modifier modules do not need to be stored in memory 130 of haptic device 40.

Extension of this concept to real-time haptic effect modifiers that have multiple parameters, as well as combinations of real-time haptic effect modifiers and all of their possible parameter values, are also contemplated.

For example, a first combination of parameters for a real-time haptic effect modifier may include a first value for a first parameter and a first value for a second parameter, a second combination of parameters may include the first value for the first parameter and a second value for the second parameter, and so on. In another example, a first combination of real-time haptic effect modifiers and parameters may include a first real-time haptic effect modifier with a first parameter value and a second real-time haptic effect modifier with a first parameter value, a second combination of real-time haptic effect modifiers and parameters may include the first real-time haptic effect modifier with the first parameter value and the second real-time haptic effect modifier with a second parameter value, and so on.

FIG. 5 depicts a block diagram of a haptic track file 400, in accordance with an embodiment of the present invention. Haptic track file 400 includes list of N real-time haptic effect modifiers 410, real-time haptic effect modifier parameters 420 and haptic control signal 430.

FIG. 6 depicts a block diagram of a haptic track file 402, in accordance with another embodiment of the present invention. Haptic track file 402 includes list of N real-time haptic effect modifiers 410, real-time haptic effect modifier parameters 420, values for real-time haptic effect parameters 422 and modified haptic control signals 432.

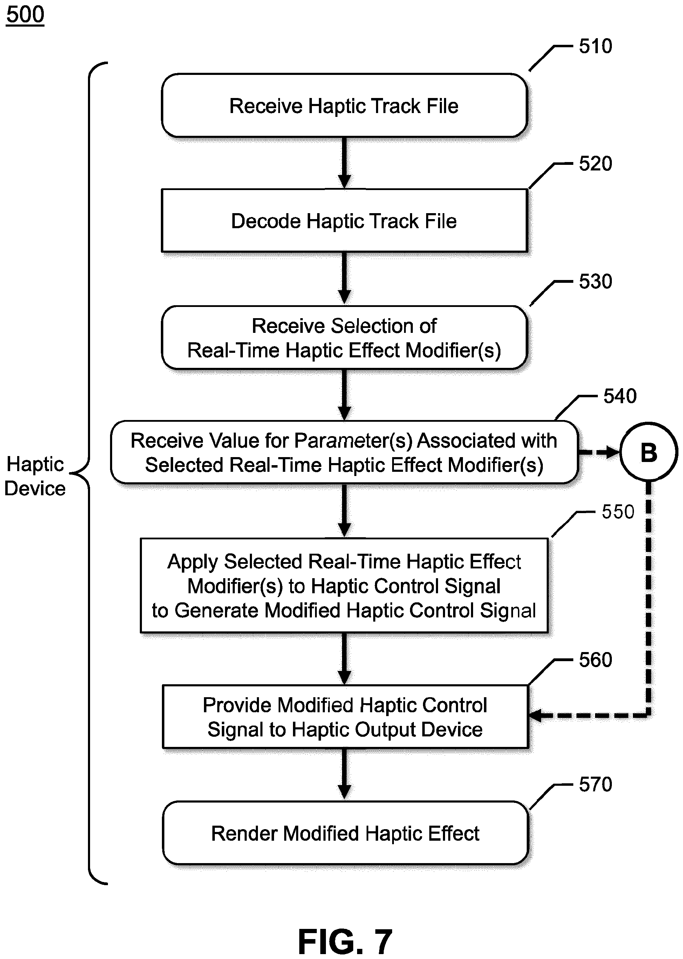

FIG. 7 depicts a flow chart illustrating functionality 500 for rendering haptic content for a haptic device, in accordance with an embodiment of the present invention.

At 510, a haptic track file is received by haptic device 40. For example, a wireless communications interface (I/O interface 150) may receive haptic track file 400, 402 over a wireless network, such as a WiFi network, a cellular network, etc. The wireless network is coupled to haptic server 20 through network 50, or, alternatively, the wireless network may be a component of network 50. In another example, wireless communications interface (I/O interface 150) may receive haptic track file 400, 402 over a wireless connection, such as Bluetooth, etc., from a computer on which haptic track file 400, 402 is stored. In another embodiment, wired communications interface (I/O interface 150) may receive haptic track file 400, 402 over a wired connection, such as a USB, etc., from a computer on which haptic track file 400, 402 is stored.

At 520, the haptic track file is decoded. For example, haptic effects module 134 may decode haptic track file 400 by extracting the list of N real-time haptic effect modifiers 410, the real-time haptic effect modifier parameters 420 and the haptic control signal 430. Similarly, haptic effects module 134 may decode haptic track file 402 by extracting the list of N real-time haptic effect modifiers 410, the real-time haptic effect modifier parameters 420, the values for real-time haptic effect modifier parameters 422 and the modified haptic control signals 432. Haptic control signal 430, as well as modified haptic control signals 432, encode one or more haptic effects to be rendered by haptic device 40.

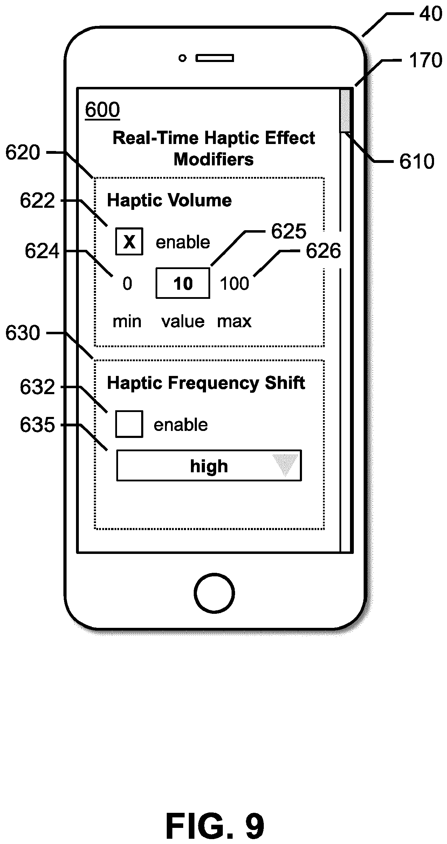

At 530, a selection of a real-time haptic effect modifiers is received. For example, haptic effects module 134 may populate the relevant fields, widgets, etc. of a GUI, such as GUI 600 presented on display 170 (FIG. 9), based on the information extracted from haptic track file 400, 402. A touchscreen (I/O device 180) may be provided for display 170, and the user selects a real-time haptic effect modifier from the list of N real-time haptic effect modifiers displayed in the GUI.

In one embodiment, each real-time haptic effect modifier parameter 420 includes a value and a range including a minimum value and a maximum value. The value is customizable by the user, but is constrained by the GUI to be within the range defined by the designer. For example, a haptic volume modifier may include a single user-customizable parameter, i.e., amplitude. The real-time haptic effect modifier parameters 420 would include a single parameter defining an amplitude value, an amplitude minimum value and an amplitude maximum value. In another example, a haptic frequency shift modifier may include two user-customizable parameters, i.e., a preferred low frequency and a preferred high frequency. The real-time haptic effect modifier parameters 420 would include two parameters, the first parameter defining a preferred low frequency value, a preferred low frequency minimum value and a preferred low frequency maximum value, and the second parameter defining a preferred high frequency value, a preferred high frequency minimum value and a preferred high frequency maximum value. The haptic frequency shift modifier estimates the frequency range of the haptic control signal, and then shifts the frequency range of the haptic control signal to the user's preferred frequency range.

In a compatible embodiment, one of the real-time haptic effect modifier parameters 420 is a flavor that has a set of discrete values. Each discrete value is associated with a pre-defined value for each of the other parameter values of the real-time haptic effect modifier. In this example, range are not needed, since the user is not permitted to directly modify the pre-defined parameter values defined by the designer. For example, a haptic volume modifier may include a single user-customizable parameter, i.e., a "volume" flavor. Real-time haptic effect modifier parameters 420 would include a set of discrete values for the "volume" flavor, such as "high," "medium" and "low," and each discrete value would be associated with a pre-defined amplitude value, such as 100 for "high," 50 for "medium," and 10 for "low." In another example, a haptic frequency shift modifier may include a single user-customizable parameter, i.e., a "frequency range" flavor. Real-time haptic effect modifier parameters 420 would include a set of discrete values for the flavor, such as "high" and "low," and each discrete value would be associated with a pre-defined low frequency value and a pre-defined high frequency value, such as 200 and 100 for "high," and 50 and 10 for "low."

At 540, a value for at least one parameter associated with the selected real-time haptic effect modifier is received. For example, if the haptic volume modifier was selected in 530, the amplitude value would be received through the GUI, which also prevents the user from inputting an amplitude value that is outside the range defined by the amplitude minimum value and the amplitude maximum value. FIG. 9 depicts an exemplary GUI 600 that includes an amplitude input (value text box 625). In another example, if the haptic frequency shift modifier was selected in 530, the preferred low frequency and the preferred high frequency values would be received through the GUI, which also prevents the user from inputting a preferred low frequency value or a preferred high frequency value that is outside the range defined by their respective minimum and maximum values. Alternatively, a "frequency range" flavor value would be received through the GUI, whose discrete value would determine the pre-defined low frequency and the pre-defined high frequency values. FIG. 9 depicts an exemplary GUI 600 that includes a "frequency range" flavor input (flavor drop-down list 635).

At 550, the selected real-time haptic effect modifier is applied to the haptic control signal to generate a modified haptic control signal. In this embodiment, the designer's real-time haptic effect modifiers are software routines or modules that are stored in memory 130. In one example, the designer's library of real-time haptic effect modifiers is stored in memory 130. In another example, only the designer's real-time haptic effect modifier routines or modules are stored in memory 130, which are received from haptic server 20 together with (or separately from) haptic track file 400. Haptic effects module 134 retrieves the selected real-time haptic effect modifier module from memory 130, and then applies selected real-time haptic effect modifier, using the parameter value received through the GUI, to the haptic control signal to generate the modified haptic control signal. If the user has selected multiple real-time haptic effect modifiers with multiple parameter values, then haptic effects module 134 applies the selected real-time haptic effect modifiers to the haptic control signal in sequence, and the application of the last real-time haptic effect modifier generates the modified haptic control signal.

At 560, the modified haptic control signal is provided to the haptic output device. For example, the modified haptic control signal is provided to haptic output device interface 160, which converts the haptic control signal into a haptic output device drive signal, and provides the haptic output device drive signal to haptic output device 190.

At 570, a modified haptic effect is rendered by the haptic output device 190.

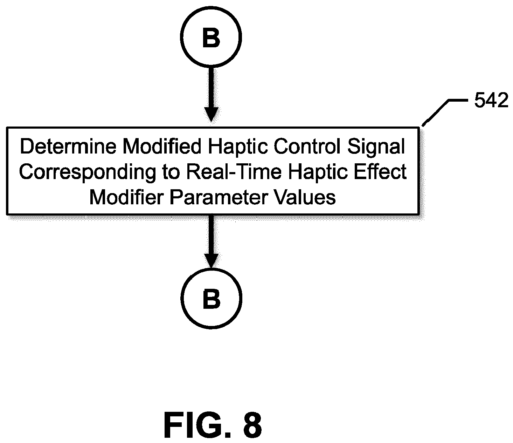

FIG. 8 depicts a flow chart illustrating alternative functionality for rendering haptic content, in accordance with an embodiment of the present invention.

At 542, the modified haptic control signal corresponding to the selected real-time haptic effect modifier and the selected parameter values is determined.

In this embodiment, haptic track file 402 has been provided by haptic server 20, and as discussed above, at 520, haptic effects module 134 decodes haptic track file 402 by extracting the list of N real-time haptic effect modifiers 410, the real-time haptic effect modifier parameters 420, the values for real-time haptic effect modifier parameters 422 and the modified haptic control signals 432. The modified haptic control signal 432, corresponding to the selected real-time haptic effect modifier and associated parameter value, is determined by comparing the selected real-time haptic effect modifier and associated parameter value to real-time haptic effect modifier parameters 422, finding the matching value, and selecting the associated modified haptic control signal 432.

FIG. 9 depicts graphical user interface (GUI) 600 for a haptic device 40, in accordance with an embodiment of the present invention.

In certain embodiments, GUI 600 is presented on display 170 that has a touchscreen (I/O device 180), and includes inputs for each of the real-time haptic effect modifiers in the list of N real-time haptic effect modifiers 410. GUI 600 determines the number and types of inputs based on the real-time haptic effect modifier parameters 420. The portion of GUI 600 that extends below (or above) the screen is accessible using scroll bar 610. In this example, two real-time haptic effect modifiers are currently visible in GUI 600, i.e., haptic volume modifier 620 and haptic frequency shift modifier 630. In other embodiments, display 170 does not have a touchscreen (I/O device 180). Instead, a different type of I/O device 180 may be used to control the real-time haptic effect modifiers and parameters. For example, I/O device 180 may be a joystick, a hand gesture-tracking camera, a set of buttons, a touchpad, etc.

Haptic volume modifier 620 has a single parameter, i.e., amplitude, with a value, a minimum value and a maximum value. Haptic volume modifier 620 has two inputs, i.e., enable check box 622 and value text box 625, and two labels, i.e., minimum value label 624 and maximum value label 626. Minimum value label 624 displays the parameter's minimum value, while the maximum value label 626 displays the parameter's maximum value. Other types of widgets may also be used, such as an enable radio button, an amplitude slider, an amplitude knob, etc. Enable check box 622 is checked, so haptic effects module 134 will apply the haptic volume modifier to the haptic control signal using an amplitude value of 10 entered into value text box 625.

Haptic frequency shift modifier 630 has three parameters, i.e., a flavor value, a low frequency value and a high frequency value. Haptic frequency shift modifier 630 has two inputs, i.e., enable check box 632 and flavor drop-down list 635. The flavor value has two discrete values, i.e., "high" and "low," that are presented in flavor drop-down list 635. Other types of widgets may also be used, such as an enable radio button, a flavor value spinner, etc. Enable check box 632 is not checked, so haptic effects module 134 will not apply the haptic frequency shift modifier to the haptic control signal.

One embodiment of the present invention provides a haptic device. The haptic device that includes a communications interface, an input device, a haptic output device, and a processor.

The communications interface is configured to receive a haptic track file including a list of real-time haptic effect modifiers, a plurality of parameters associated with the real-time haptic effect modifiers, and a haptic control signal.

The input device is configured to receive input from a user, the input including a selection of at least one real-time haptic effect modifier from the list of real-time haptic effect modifiers, and a value for at least one parameter associated with the selected real-time haptic effect modifier.

The haptic output device is configured to render one or more haptic effects to the user based on the haptic control signal. The haptic output device is also configured to render one or more modified haptic effects to the user based on a modified haptic control signal.

The processor is configured to decode the haptic track file to extract the list of real-time haptic effect modifiers, the plurality of parameters associated with the real-time haptic effect modifiers, and the haptic control signal; apply the selected real-time haptic effect modifier to the haptic control signal, based on the value for the parameter associated with the selected real-time haptic effect modifier, to generate a modified haptic control signal; and provide the modified haptic control signal to the haptic output device.

One embodiment of the present invention provides a method for rendering haptic content for a haptic device. The method includes receiving a haptic track file including a list of real-time haptic effect modifiers, a plurality of parameters associated with the real-time haptic effect modifiers, and a haptic control signal; decoding the haptic track file to extract the list of real-time haptic effect modifiers, the plurality of parameters associated with the real-time haptic effect modifiers, and the haptic control signal; receiving, via an input device, input from a user including a selection of at least one real-time haptic effect modifier from the list of real-time haptic effect modifiers, and a value for at least one parameter associated with the selected real-time haptic effect modifier; applying the selected real-time haptic effect modifier to the haptic control signal, based on the value for the parameter associated with the selected real-time haptic effect modifier, to generate a modified haptic control signal; providing the modified haptic control signal to a haptic output device; and rendering, by the haptic output device, a modified haptic effect to the user based on the modified haptic control signal.

Another embodiment of the present invention provides a method for rendering haptic content for a haptic device. The method includes receiving a haptic track file including a list of real-time haptic effect modifiers, a plurality of parameters associated with the real-time haptic effect modifiers, and a plurality of modified haptic control signals; decoding the haptic track file to extract the list of real-time haptic effect modifiers, the plurality of parameters associated with the real-time haptic effect modifiers, and the plurality of modified haptic control signals; receiving, via an input device, input from a user including a selection of at least one real-time haptic effect modifier from the list of real-time haptic effect modifiers, and a value for at least one parameter associated with the selected real-time haptic effect modifier; determining which modified haptic control signal corresponds to the selected real-time haptic effect modifier and the value for the parameter associated with the selected real-time haptic effect modifier; providing the corresponding modified haptic control signal to a haptic output device; and rendering, by the haptic output device, a modified haptic effect to the user based on the corresponding modified haptic control signal.

The various embodiments and examples described herein are combinable unless otherwise stated.

The many features and advantages of the invention are apparent from the detailed specification, and, thus, it is intended by the appended claims to cover all such features and advantages of the invention which fall within the true spirit and scope of the invention. Further, since numerous modifications and variations will readily occur to those skilled in the art, it is not desired to limit the invention to the exact construction and operation illustrated and described, and, accordingly, all suitable modifications and equivalents may be resorted to that fall within the scope of the invention.

## Claims

1. A haptic device, comprising:
a communications interface configured to receive a haptic track file including a list of real-time haptic effect modifiers, a plurality of parameters associated with the real-time haptic effect modifiers, and a haptic control signal;
an input device configured to receive input from a user, the input including a selection of at least one real-time haptic effect modifier from the list of real-time haptic effect modifiers, and a value for at least one parameter associated with the selected real-time haptic effect modifier;
a haptic output device configured to render one or more haptic effects to the user based on the haptic control signal; and
a processor, coupled to the communications interface, the input device and the haptic output device, configured to:
decode the haptic track file to extract the list of real-time haptic effect modifiers, the plurality of parameters associated with the real-time haptic effect modifiers, and the haptic control signal,
apply the selected real-time haptic effect modifier to the haptic control signal, based on the value for the parameter associated with the selected real-time haptic effect modifier, to generate a modified haptic control signal, and
provide the modified haptic control signal to the haptic output device,
wherein the haptic output device is further configured to render one or more modified haptic effects to the user based on the modified haptic control signal.

2. The haptic device according to claim 1, further comprising:
a display, coupled to the processor, configured to present a graphical user interface (GUI) to the user, the GUI displaying the list of real-time haptic effect modifiers and the plurality of parameters associated with the real-time haptic effect modifiers,
wherein the input device is a touchscreen.

3. The haptic device according to claim 1, wherein each parameter associated with each real-time haptic effect modifier includes a value and a range having a minimum value and a maximum value, and wherein the value for the parameter associated with the selected real-time haptic effect modifier falls within the range.

4. The haptic device according to claim 1, wherein the value for the parameter associated with the selected real-time haptic effect modifier is a discrete value selected from a set of discrete values, each discrete value being associated with a pre-defined value for an additional parameter associated with the selected real-time haptic effect modifier.

5. The haptic device according to claim 1, wherein the modified haptic effect is a vibrotactile haptic effect; or
wherein the modified haptic effect is a vibrotactile haptic effect and wherein the list of real-time haptic effect modifiers includes at least one of a haptic volume modifier, a haptic frequency modifier, a haptic contrast modifier, a haptic bass boost modifier, a haptic delay modifier, a haptic reverberation modifier, or a haptic tremolo modifier; or
wherein the modified haptic effect is a vibrotactile haptic effect and wherein the list of real-time haptic effect modifiers includes at least one of a haptic volume modifier, a haptic frequency modifier, a haptic contrast modifier, a haptic bass boost modifier, a haptic delay modifier, a haptic reverberation modifier, or a haptic tremolo modifier and wherein the haptic frequency modifier includes a frequency shift modifier, a phaser modifier, a flanger modifier, a chorus modifier, a filter sweep modifier, an envelope modifier, a wah-wah modifier, a resonator modifier, or an arpeggiator modifier.

6. The haptic device according to claim 1, wherein:
the input includes a selection of a first real-time haptic effect modifier from the list of real-time haptic effect modifiers, a selection of a second real-time haptic effect modifier from the list of real-time haptic effect modifiers, a first value for a parameter associated with the first real-time haptic effect modifier, and a second value for a parameter associated with the second real-time haptic effect modifier,
the first real-time haptic effect modifier is applied to the haptic control signal, based on the first value for the parameter associated with the first real-time haptic effect modifier, to generate an intermediate haptic control signal, and
the second real-time haptic effect modifier is applied to the intermediate haptic control signal, based on the second value for the parameter associated with the second real-time haptic effect modifier, to generate the modified haptic control signal.

7. A method for rendering haptic effects on a haptic device, comprising:
receiving a haptic track file including a list of real-time haptic effect modifiers, a plurality of parameters associated with the real-time haptic effect modifiers, and a haptic control signal;
decoding the haptic track file to extract the list of real-time haptic effect modifiers, the plurality of parameters associated with the real-time haptic effect modifiers, and the haptic control signal;
receiving, via an input device, input from a user including a selection of at least one real-time haptic effect modifier from the list of real-time haptic effect modifiers, and a value for at least one parameter associated with the selected real-time haptic effect modifier;
applying the selected real-time haptic effect modifier to the haptic control signal, based on the value for the parameter associated with the selected real-time haptic effect modifier, to generate a modified haptic control signal;
providing the modified haptic control signal to a haptic output device; and
rendering, by the haptic output device, a modified haptic effect to the user based on the modified haptic control signal.

8. The method according to claim 7, further comprising:
presenting a graphical user interface (GUI) to the user, the GUI displaying the list of real-time haptic effect modifiers and the plurality of parameters associated with the real-time haptic effect modifiers,
wherein the input device is a touchscreen.

9. The method according to claim 7, wherein each parameter associated with each real-time haptic effect modifier includes a value and a range having a minimum value and a maximum value, and wherein the value for the parameter associated with the selected real-time haptic effect modifier falls within the range; or
wherein the value for the parameter associated with the selected real-time haptic effect modifier is a discrete value selected from a set of discrete values, each discrete value being associated with a pre-defined value for an additional parameter associated with the selected real-time haptic effect modifier.

10. The method according to claim 7, wherein the modified haptic effect is a vibrotactile haptic effect; or
wherein the modified haptic effect is a vibrotactile haptic effect and wherein the list of real-time haptic effect modifiers includes at least one of a haptic volume modifier, a haptic frequency modifier, a haptic contrast modifier, a haptic bass boost modifier, a haptic delay modifier, a haptic reverberation modifier, or a haptic tremolo modifier; or
wherein the modified haptic effect is a vibrotactile haptic effect and wherein the list of real-time haptic effect modifiers includes at least one of a haptic volume modifier, a haptic frequency modifier, a haptic contrast modifier, a haptic bass boost modifier, a haptic delay modifier, a haptic reverberation modifier, or a haptic tremolo modifier and wherein the haptic frequency modifier includes a frequency shift modifier, a phaser modifier, a flanger modifier, a chorus modifier, a filter sweep modifier, an envelope modifier, a wah-wah modifier, a resonator modifier, or an arpeggiator modifier.

11. The method according to claim 7, wherein:
the input includes a selection of a first real-time haptic effect modifier from the list of real-time haptic effect modifiers, a selection of a second real-time haptic effect modifier from the list of real-time haptic effect modifiers, a first value for a parameter associated with the first real-time haptic effect modifier, and a second value for a parameter associated with the second real-time haptic effect modifier,
the first real-time haptic effect modifier is applied to the haptic control signal, based on the first value for the parameter associated with the first real-time haptic effect modifier, to generate an intermediate haptic control signal, and
the second real-time haptic effect modifier is applied to the intermediate haptic control signal, based on the second value for the parameter associated with the second real-time haptic effect modifier, to generate the modified haptic control signal.

12. A method for rendering haptic effects on a haptic device, comprising:
receiving a haptic track file including a list of real-time haptic effect modifiers, a plurality of parameters associated with the real-time haptic effect modifiers, and a plurality of modified haptic control signals;
decoding the haptic track file to extract the list of real-time haptic effect modifiers, the plurality of parameters associated with the real-time haptic effect modifiers, and the plurality of modified haptic control signals;
receiving, via an input device, input from a user including a selection of at least one real-time haptic effect modifier from the list of real-time haptic effect modifiers, and a value for at least one parameter associated with the selected real-time haptic effect modifier;
determining which modified haptic control signal corresponds to the selected real-time haptic effect modifier and the value for the parameter associated with the selected real-time haptic effect modifier;
providing the corresponding modified haptic control signal to a haptic output device; and
rendering, by the haptic output device, the modified haptic effect to the user based on the corresponding modified haptic control signal.

13. The method according to claim 12, further comprising:
presenting a graphical user interface (GUI) to the user, the GUI displaying the list of real-time haptic effect modifiers and the plurality of parameters associated with the real-time haptic effect modifiers,
wherein the input device is a touchscreen.

14. The method according to claim 12, wherein each parameter associated with each real-time haptic effect modifier includes a value and a range having a minimum value and a maximum value, and wherein the value for the parameter associated with the selected real-time haptic effect modifier falls within the range.

15. The method according to claim 12, wherein the value for the parameter associated with the selected real-time haptic effect modifier is a discrete value selected from a set of discrete values, each discrete value being associated with a pre-defined value for an additional parameter associated with the selected real-time haptic effect modifier.
